# EUROPÄISCHE PATENTSCHRIFT

(11) **EP 2 732 144 B1**
(45) Veröffentlichungstag und Bekanntmachung des Hinweises auf die Patenterteilung: **27.04.2016**
(21) Anmeldenummer: 12734819.1
(22) Anmeldetag: 10.07.2012
(51) Int. Cl.: F02B 37/20, F02B 37/10, B63H 21/20, F02B 37/04, B60K 6/48, B60W 10/30, B63H 23/18, B63J 3/02, B63H 23/10, B63J 3/00, B63H 23/14

(54) **BRENNKRAFTMASCHINE, WASSERFAHRZEUG UND VERFAHREN ZUM BETRIEB EINES SCHIFFSVERSORGUNGSNETZES MIT EINER BRENNKRAFTMASCHINE**
COMBUSTION ENGINE, WATER CRAFT, AND METHOD OF OPERATING A SHIP POWER SUPPLY NETWORK WITH A COMBUSTION ENGINE
MOTEUR À COMBUSTION, VÉHICULE MARIN, ET PROCÉDÉ DE FONCTIONNEMENT D'UN RÉSEAU D'ALIMENTATION EN ÉNERGIE D'UN VÉHICULE MARIN

(30) Priorität: 12.07.2011 DE 102011079036
(43) Veröffentlichungstag der Anmeldung: 21.05.2014
(73) Patentinhaber: MTU Friedrichshafen GmbH, 88045 Friedrichshafen (DE)
(72) Erfinder: SCHMALZING, Claus-Oliver, 88339 Bad Waldsee (DE); FRANK, Holger, 88045 Friedrichshafen (DE); GORSE, Philippe, 88045 Friedrichshafen (DE); RIEGGER, Peter, 88662 Überlingen (DE)
(74) Vertreter: Winter, Josef
(86) Internationale Anmeldenummer: PCT/EP2012/002907
(87) Internationale Veröffentlichungsnummer: WO 2013/007378

(56) Entgegenhaltungen:
- DE-A1- 10 315 148
- DE-A1-102006 059 664
- US-A1- 2009 107 739

## Beschreibung

Die Erfindung betrifft eine Brennkraftmaschine gemäß dem Oberbegriff des Anspruchs 1. Weiter betrifft die Erfindung ein Wasserfahrzeug gemäß dem Anspruch 10 sowie ein Verfahren zum Betrieb des Schiffsversorgungsnetzes mit einer Brennkraftmaschine gemäß dem Anspruch 12.

Eine Brennkraftmaschine der eingangs genannten Art ist in DE 103 15 148 A1 der Anmelderin beschrieben. In einer geeigneten Ventilstellung kann eine vom Kompressor geförderte Luft bei einer eingangs genannten Brennkraftmaschine auf die Turbine des Abgasturboladers geführt werden. Durch diese Maßnahme wird ein spontaneres Ansprechverhalten beim Übergang vom Leerlaufbetrieb auf eine höhere Laststufe erzielt.

Andere Ansätze einer kompressorunterstützten Turboaufladung sind beispielsweise DE 33 17 017 A1, DE 42 10 070 C1 oder GB 21 21 474 A zu entnehmen, die jedoch kein spontanes Ansprechverhalten beim Übergang vom Leerlaufbetrieb auf eine höhere Laststufe erlauben.

Wünschenswert neben einem spontaneren Ansprechverhalten beim Übergang vom Leerlaufbetrieb auf eine höhere Laststufe ist darüberhinaus eine vergleichsweise hohe Flexibilität bzw. Dynamik mit dem das spontane Ansprechverhalten zur Verfügung gestellt werden kann. Dazu erweisen sich die bisherigen Maßnahmen als noch verbesserungswürdig. Dies gilt generell sowohl für eine einstufige als auch für eine zweistufige Aufladung eines Brennkraftmotors. Insofern erweisen sich auch die in DE 198 37 978 A1 und GB 21 21 474 A genannten Maßnahmen erst recht als unzureichend, da diese nur eine vergleichsweise träge Reaktion einer Brennkraftmaschine auf eine Leistungsanforderung ermöglichen, wenn es darum geht ein hochflexibles und spontanes Ansprechverhalten beim Übergang vom Leerlaufbetrieb auf eine höhere Laststufe zu erzielen.

Ein ganz anderes Konzept ist beispielsweise US 6,840,045 B2 zu entnehmen, bei dem es unter ausdrücklicher Inkaufnahme eines eher trägen Ansprechverhaltens darum geht, eine Brennkraftmaschine mit einem breiten Spektrum von Drehleistungen zu versehen. In dieser ist grundsätzlich vorgeschlagen, eine erste Elektromaschine in Form eines Motor/Generators mit Motordrehzahl der Brennkraftmaschine zu betreiben und diese erste Elektromaschine mit einem zweiten Motor/Generator zu koppeln, der an die Achse eines Turboladers angeschlossen ist. Dies ermöglicht je nach Drehgeschwindigkeit der Brennkraftmaschine einen Betrieb des zweiten Motor/Generators entweder als Generator -bei niedriger Drehgeschwindigkeit-- oder aber als Motor -bei hoher Drehgeschwindigkeit der Brennkraftmaschine. Bei hoher Drehgeschwindigkeit der Brennkraftmaschine kann somit die zusätzlich erzeugte elektrische Leistung des zweiten Motor/Generators zusammen mit der Leistung des ersten Motor/Generators zur Brennkraftmaschine zurückgekoppelt werden, um eine noch höhere Gesamtleistung zu erreichen. Ein ähnliches Konzept ist in WO 2008/079180 A1 beschrieben.

Solche Konzepte tragen jedoch nicht dazu bei ein spontanes Ansprechverhalten der Brennkraftmaschine gezielt zu erhöhen. Vielmehr dienen solche Konzepte, wie beispielsweise generell in DE 10 2007 010 027 A1 beschrieben, einen ersten Ansatz für einen Hybridantrieb zu liefern. In DE 10 2007 010 027 A1 ist dazu ein Antriebsstrang mit einem Brennkraftmotor sowie eine mit Motordrehzahl drehende Elektromaschine in Form eines Motor/Generators beschrieben. Über ein Steuergerät ist dieser Motor/Generator zusammen mit einer als Motor ausgelegten zweiten Elektromaschine zum Antrieb eines Verdichters und einer als Generator von einer Turbine im Abgasstrom angetriebenen dritten Elektromaschine gekoppelt. Die zum Antrieb der zweiten Elektromaschine benötigte elektrische Energie wird, gesteuert von der Elektronik, aus der dritten Elektromaschine zur zweiten Elektromaschine geleitet. So steht für die zweite Elektromaschine stets ein optimaler Betriebspunkt zum Betrieb des Verdichters zur Verfügung. Für den Fall, dass die dritte Elektromaschine mehr elektrische Energie liefert als gerade von der zweiten Elektromaschine benötigt wird, kann diese zum Betrieb der als Motor/Generator ausgelegten ersten Elektromaschine -das heißt zum sogenannten elektrischen Boostenverwendet werden. Alternativ oder zusätzlich kann die elektrische Energie auch In einem Energiespeicher abgelegt werden. Eine Umverteilung der zur Verfügung stehenden Leistung zwischen den Elektromaschinen mittels einer Steuerung ist vergleichsweise aufwändig und einem spontanen Ansprechverhalten eines Brennkraftmotors nicht zuträglich.

An dieser Stelle setzt die Erfindung an, deren Aufgabe es ist, eine Brennkraftmaschine der eingangs genannten Art sowie ein Wasserfahrzeug und ein Verfahren zum Betrieb eines Schiffsversorgungsnetz mit einer Brennkraftmaschine anzugeben, bei dem nicht nur das spontane Ansprechverhalten beim Übergang vom Leerlaufbetrieb auf eine höhere Laststufe verbessert ist, sondern darüber hinaus auch die flexible Verfügbarkeit des spontanen Ansprechverhaltens verbessert ist. Insbesondere soll das spontane Ansprechverhalten mit vergleichsweise hoher Taktung zur Verfügung stehen.

Die Aufgabe betreffend der Brennkraftmaschine wird mit einer Brennkraftmaschine der eingangs genannten Art gelöst, bei der erfindungsgemäß auch die Merkmale des kennzeichnenden Teils des Anspruchs 1 vorgesehen sind.

Erfindungsgemäß ist dazu eine als Motor/Generator ausgelegte Elektromaschine zur Erweiterung der eingangs genannten Brennkraftmaschine vorgesehen, die an den Brennkraftmotor gekoppelt ist. Mit anderen Worten ist der Motor/Generator an die Kurbelwelle des Brennkraftmotors gekoppelt; dreht Insbesondere mit der Drehzahl des Brennkraftmotors. Die vorteilhaft derart ausgelegte Elektromaschine ist als Generator von dem Brennkraftmotor, insbesondere von dessen Kurbelwelle, antreibbar oder kann als Motor den Brennkraftmotor, insbesondere dessen Kurbelwelle, antreiben. Das erfindungsgemäße Konzept sieht darüberhinaus vor, dass der Kompressor über eine mechanische Antriebskopplung direkt von der Elektromaschine antreibbar ist. Mit anderen Worten kann die Elektromaschine, insbesondere als Motor, den Kompressor über eine mechanische Antriebskopplung direkt antreiben. Anders ausgedrückt sieht das Konzept der Erfindung im Unterschied zum Stand der Technik vor, dass die Antriebsleistung einer als Motor/Generator ausgelegten Elektromaschine praktisch ohne Umsetzungsverluste - und damit insbesondere ohne Zeitverluste- dem Kompressor zur Verfügung gestellt wird. Insbesondere ist dazu vorgesehen, dass die Leistung der als Motor/Generator ausgelegten Elektromaschine in jedenfalls einem möglichen Betriebsmodus dem Kompressor ohne Zwischenspeicherung der Leistung, insbesondere ohne elektrische Zwischenspeicherung, zur Verfügung gestellt wird.

Vorteilhaft ist vorgesehen, diesen Betriebsmodus als sogenannten Intervallmodus auszubilden, mittels dem es möglich ist, die Leistung der als Motor/Generator ausgelegten Elektromaschine In wiederkehrenden Zeitintervallen direkt dem Kompressor antreibend zur Verfügung zu stellen.

Das Konzept der Erfindung führt dementsprechend auch auf ein Wasserfahrzeug der eingangs genannten Art mit einer Brennkraftmaschine gemäß dem Konzept der Erfindung, wobei in einem Intervallmodus mit wiederkehrenden Zeitintervallen der Kompressor über eine mechanische Antriebskopplung direkt von der Elektromaschine antreibbar ist. Dieser Intervallmodus hat sich als besonders bevorzugt beispielsweise zum Sportfischen geeignet, bei dem das Wasserfahrzeug in wiederkehrenden Zeitintervallen spontan ansprechen muss, um einen Übergang vom Leerlaufbetrieb in einen Betrieb einer vergleichsweise hohen Laststufe zu erzielen. Die vergleichsweise hohe Laststufe liegt zwar grösstenteils deutlich unter einem Normallastbetrleb, kann jedoch bei Bedarf bis zu einem Volliastbetrieb ausgebaut werden. Vorzugsweise liegt die vergleichsweise hohe Laststufe In einem Bereich zwischen 40 bis 60 % des Volllastbetrlebes, vorzugsweise in einem Bereich zwischen 40 bis 60% des Normallastbetriebes - gemessen an der Motordrehzahl oder dem Drehmoment.

Die Brennkraftmaschine ist insbesondere ausgebildet, um ein Verfahren gemäß dem beanspruchten Konzept der Erfindung auszuführen. Die Erfindung führt auf ein entsprechendes Verfahren zum Betrieb eines Schiffsversorgungsnetzes mit einer Brennkraftmaschine der vorgenannten Art. Das Verfahren weist erfindungsgemäß eine Mehrzahl von Betriebsmodi auf wie folgt:

Startermodus, Generatormodus, Elektroboostmodus, Schleichfahrtmodus und Intervallmodus.

Der Startermodus ist dabei derart ausgebildet, dass der Brennkraftmotor von der Elektromaschine angetrieben wird. Dieser Modus entspricht insofern einem an sich bekannten Starterverhalten, bei dem die Elektromaschine als Motor den Brennkraftmotor antreibt und startet. Die Elektromaschine kann dazu beispielsweise aus einer Batterie angetrieben werden.

Umgekehrt ist der Generatormodus derart ausgebildet, dass die Elektromaschine von dem Brennkraftmotor angetrieben wird. In dem Fall kann die Elektromaschine als Generator Strom produzieren und dieser in vielfältiger Hinsicht, u.a. für das Bordnetz, genutzt werden.

Der Elektroboostmodus ist derart ausgebildet, dass die Elektromaschine und der Brennkraftmotor einen Propeller antreiben. In dem Fall wird dem Propeller mit vergleichsweise hohem Ansprechverhalten eine besonders hohe Antriebsleistung zur Verfügung gestellt; nämlich von der Elektromaschine als auch von dem Brennkraftmotor.

Der Schleichfahrtmodus ist derart ausgebildet, dass nur die Elektromaschine einen Propeller antreibt. Dieser Betriebsmodus erweist sich als besonders geräuscharm und eignet sich beispielsweise zum Manövrieren im Hafen. Insbesondere ist dazu vorgesehen, dass der Brennkraftmotor und der Kompressor keine Antriebsleistung an den Propeller liefern.

Erfindungsgemäß weist das Verfahren zum Betrieb eines Schiffsversorgungsnetzes auch den vorgenannten Intervallmodus auf. Der Intervallmodus ist derart ausgebildet, dass der Brennkraftmotor einen Propeller antreibt und in wiederkehrenden Zeitintervallen die Elektromaschine den Kompressor antreibt.

Es hat sich gezeigt, dass in der Tat der Kompressorantrieb über die Elektromaschine es erst ermöglicht, in vergleichsweise kurzen und darüber hinaus auch hochfrequenten Zeitintervallen eine Drehzahl und/oder Drehmoment-Leistung des Brennkraftmotors aus dem Leerlaufbetrieb in einen vergleichsweise hohen Leistungsbereich zu heben. Aufgrund des Konzepts, den Kompressor über eine mechanische Antriebskopplung direkt mit der Elektromaschine anzutreiben, ergibt sich ein besonders spontanes Ansprechverhalten beim Übergang vom Leerlaufbetrieb auf eine vergleichsweise hohe Laststufe, die zudem mit einer hohen Taktung wiederholbar ist.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weitere Vorteile zu realisieren.

Es hat sich als besonders vorteilhaft erwiesen, dass der Kompressor in zeitlich begrenzten Zeitintervallen getaktet direkt von der Elektromaschine antreibbar ist. Die Zeitintervalle liegen bevorzugt unterhalb von 10 Minuten können jedoch davon unabhängig wesentlich kleiner sein, vorteilhaft geringer als eine Minute, insbesondere geringer als 30 Sekunden sein. Hinsichtlich dieser Art bemessenen Zeitintervalle hat es sich als vorteilhaft erwiesen, die Brennkraftmaschine bei einem Wasserfahrzeug in einem vorgenannten Intervallmodus zu betreiben, so dass das Wasserfahrzeug besonders vorteilhaft zum Sportfischen verwendet werden kann.

In einem Intervallmodus wird der Kompressor bevorzugt über eine mechanische Antriebskopplung direkt von der Elektromaschine angetrieben, wobei in besonders vorteilhafter Weise die Elektromaschine von einer Batterie angetrieben wird. Dadurch wird die Stromversorgung der Elektromaschine sichergestellt. Somit wird auch das spontane und hochflexible Ansprechverhalten des über den Kompressor zusätzlich mit hoher Leistung versehbaren Brennkraftmotors sichergestellt.

Es hat sich gezeigt, dass in einem Intervallmodus der Propeller mit einer Drehzahl der Brennkraftmaschine in einem Drehzahlbereich oberhalb von 300 Umdrehungen pro Minute bis zu 1600 U/min (RPM) angetrieben werden kann. Zusätzlich oder alternativ kann für den Intervallmodus ein Drehmoment in einem Drehmomentbereich zwischen 500 und 3000 Nm zur Verfügung stehen.

Im Rahmen einer Weiterbildung des Verfahrens ist es möglich, die Brennkraftmaschine jedenfalls im Intervallmodus in einem oben genannten Zeitintervall mit wenigstens einer Rampe zwischen einer Drehzahluntergrenze und einer Drehzahlobergrenze in dem Drehzahlbereich zu betreiben. Die Drehzahluntergrenze liegt vorteilhaft beim Leerlaufbetrieb oder leicht darüber. Zusätzlich oder alternativ ist es möglich wenigstens eine Rampe zwischen einer Drehmomentuntergrenze und einer Drehmomentobergrenze in dem genannten Drehmomentbereich zu fahren. Vorteilhaft liegt die Drehmomentuntergrenze in einem Leerlaufbetrieb.

Ein vorgenannter Intervallmodus kann vorteilhaft beispielsweise direkt über eine Modustastenbetätigung der Steuerung erfolgen. Darüber kann im Intervallmodus der Kompressorantrieb aktiv durch menschliche Interaktion aktiviert werden. Zusätzlich oder alternativ kann der Intervallmodus auch über einen Ladeluftmangel und/oder eine Geschwindigkeitswahl eingeleitet werden. In den beiden letzten genannten Fällen wird der Intervallmodus indirekt über die Aktivierung des Kompressorantriebs eingeleitet.

Die Anbindung der als Motor/Generator ausgelegten Elektromaschine an den Antriebsstrang kann in grundsätzlich unterschiedlicher Weise realisiert werden. Als besonders bevorzugt hat sich die direkte Kopplung des Kompressors an die Elektromaschine über die mechanische Antriebskopplung erwiesen. Vorteilhaft weist die mechanische Antriebskopplung ein Getriebe auf. Das Getriebe Ist bevorzugt mittels einem Motorgetriebe und/oder einem mechanischen Verdichter gebildet. Vorteilhaft ist an die Antriebskopplung abtriebsseitig eine Antriebswelle des Kompressors und antriebsseitig eine Antriebswelle der Elektromaschine angekoppelt. Diese Ausführung einer mechanischen Antriebskopplung betrifft insbesondere eine Motorfunktion der Elektromaschine.

Bevorzugt weist die mechanische Antriebskopplung zusätzlich ein Propellergetriebe auf. Vorteilhaft ist an das Propellergetriebe abtriebsseitig eine Antriebswelle des Propellers und antriebsseitig eine Antriebswelle der Elektromaschine angekoppelt.

Im Rahmen einer besonders bevorzugten Weiterbildung ist an das Motorgetriebe abtriebsseitig eine Antriebswelle des Kompressors und eine Kurbelwelle des Brennkraftmotors gleichzeitig angekoppelt. Zusätzlich oder alternativ Ist besonders vorteilhaft an das Propellergetriebe abtriebsseitig eine Antriebswelle des Propellers und eine Kurbelwelle des Brennkraftmotors gleichzeitig angekoppelt.

Die vorgenannte mechanische Antriebskopplung oder eine der Weiterbildungen hat sich als eine besonders vorteilhafte Möglichkeit herausgestellt, die Elektromaschine als Motor zu betreiben. Im Motorbetrieb übernimmt die Elektromaschine bevorzugt die Funktion eines Starters und/oder eines Elektroantriebs. In einem anderen Betriebsmodus kann die Elektromaschine als Generator betrieben werden. Im Generatorbetrieb übernimmt die Elektromaschine bevorzugt die Funktion einer Stromerzeugung für ein Bordnetz und/oder eine Batterie.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung ummittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen idee der Erfindung abzuweichen. Die in der Beschreibung, In der Zeichnung sowie In den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben.sich aus der nachfolgenden Beschreibung der bevorzugten Ausführungsbeispiele sowie anhand der Zeichnung; diese zeigt in:
Fig. 1: eine schematisch-symbolische Darstellung eines Wasserfahrzeugs mit einer Brennkraftmaschine sowie der Peripherie eines Schiffsversorgungsnetzes und einem Propeller für ein Wasserfahrzeug gemäß einer bevorzugten Ausführungsform;
Fig. 2: eine schematische Darstellung einer Brennkraftmaschine für eine bevorzugte Ausführungsform der Fig. 1;
Fig. 3: ein beispielhafter Kennlinienverlauf zur Charakterisierung des Betriebsbereichs einer Brennkraftmaschine Im Intervallmodus bei gegebener Motordrehzahl - in Ansicht A ein Drehmoment als Funktion der Motordrehzahl - In Ansicht B die Motordrehzahl als Funktion der Zeit, woraus eine bevorzugte Taktung von Zeitintervallen im Intervallmodus ersichtlich sind.

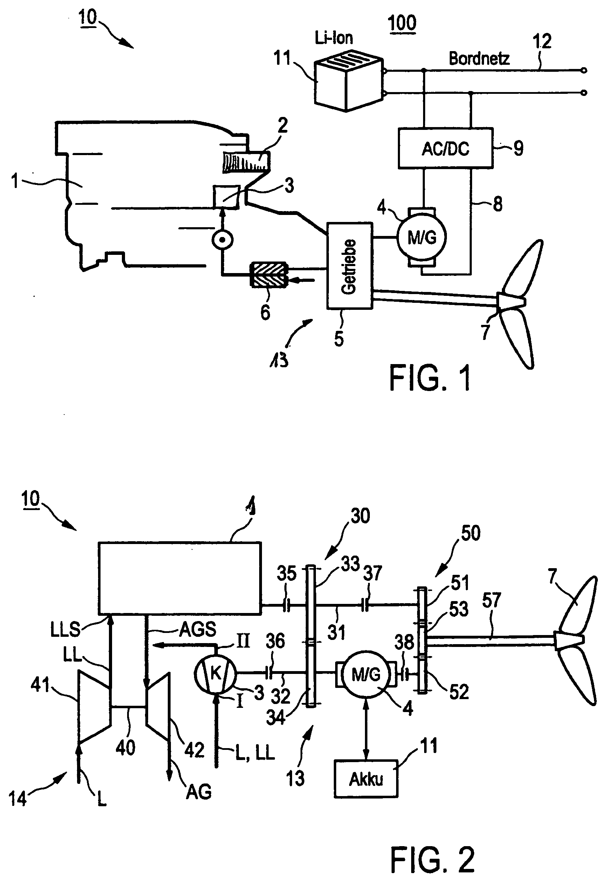

Fig. 1 zeigt schematisch ein Wasserfahrzeug 100 mit einer Brennkraftmaschine 10, die einen Brennkraftmotor 1, einen Abgasturbolader 2, einen Kompressor 3 sowie eine als Motor/Generator ausgelegte Elektromaschine 4 aufweist. Die Elektromaschine 4 wird mit Motordrehzahl des Brennkraftmotors 1 betrieben und ist an diesen sowie den Kompressor 3 gemäß dem Konzept der Erfindung über eine mechanische Antriebskopplung 13, vorliegend mit einem mechanischen Getriebe 5 und einem mechanischen Verdichter 6, angebunden. Das Getriebe 5 dient außerdem zum Antrieb eines Propellers 7 des Wasserfahrzeugs 100. Die Elektromaschine 4 ist außerdem über ein Stromnetz 8 und einen Wechselstrom-Gleichstrom-Wandler (AC/DC) 9 zur Stromversorgung des Wasserfahrzeugs 100 ausgelegt. An das Stromnetz 8 sind unter anderem eine Batterie 11, hier in Form eines Lithium-lonen-Akkumulators, und das Bordnetz 12 angeschlossen.

In Fig. 2 ist der Aufbau der Brennkraftmaschine 10 schematisch gezeigt, woraus insbesondere die mechanische Antriebskopplung 13 der Elektromaschine 4 und des Kompressors 3 sowie im Weiteren des Propellers 7 und des Brennkraftmotors 1 ersichtlich ist. Die Brennkraftmaschine 10 wird vorliegend durch ein beispielhaft dargestelltes einstufiges Aufladesystem 14 aufgeladen.

Das Aufladesystem 14 umfasst hier einen einstufigen Turbolader 40 mit einem über eine Turboladerachse gekoppelten Verdichter 41 und einer Turbine 42. Über den Verdichter 41 wird Frischluft L angesaugt und als Ladeluft LL auf einer Ladefluidseite LLS dem Brennkraftmotor 1 zur Aufladung desselben zugeführt. Der Verdichter 41 wird durch die Turbine 42 über eine nicht näher bezeichnete Achse angetrieben. Der Turbine 42 wird dazu der Abgasseite AGS des Brennkraftmotors 1 entnommenes Abgas AG zugeführt und unter Antrieb der Turbine 42 einem nicht näher bezeichneten Abgasnachbehandlungssystem zugeführt. Der Kompressor 3 weist eine Primärseite I und eine Sekundärseite II auf. Die Primärseite I des Kompressors 3 ist auf der Ladefluidseite LLS des Brennkraftmotors 1 in nicht näher dargestellter Weise angeschlossen. Dem Kompressor 3 wird vorliegend Frischluft L zugeführt -- im Falle einer zweistufigen Aufladung könnte dem Kompressor 3 auch Ladeluft LL aus der ersten Aufladestufe zugeführt werden. Vorliegend wird die durch den Kompressor 3 verdichtete Frischluft L in hochverdichteter Form von der Sekundärseite II des Kompressors 3 der Abgasseite AGS des Brennkraftmotors 1 zugeführt. Vorliegend wird die vom Kompressor 3 verdichtete Luft abgasstromabwärts vor einem Eingang der Turbine 42 zur Verfügung gestellt. Dadurch wird die Turbine 42 durch die vom Brennkraftmotor 1 entnommenen Abgase AG und durch die vom Kompressor 3 verdichtete Luft angetrieben.

Diese Maßnahme hat sich als sehr effektiv erwiesen, um ein spontaneres Ansprechverhalten des Brennkraftmotors 1 vom Leerlaufbetrieb auf eine höhere Laststufe zu erreichen.

Der Kompressor 3 ist vorliegend darüber hinaus über eine dazu besonders vorteilhafte ausgelegte mechanische Antriebskopplung 13 direkt angetrieben. Dies ermöglicht vorliegend zum einen einen direkten mechanischen Antrieb des Kompressors 3 durch die Elektromaschine 4, das heißt mit vergleichsweise hoher Leistung. Um dies sicher zu stellen wird die Elektromaschine 4 mit der Leistung eines aufgeladenen Akkumulators 11 als Motor betrieben.

Desweiteren kann die Elektromaschine auf diesem Weg in einem sogenannten Intervallmodus betrieben werden, der weiter unten erläutert ist. Das Konzept der mechanischen Antriebskopplung 13 bietet nicht nur ein hocheffizientes sondern auch flexibles in Intervallen und mit vergleichsweise hoher Taktrate zur Verfügung stehendes Antriebssystem für den Kompressor 3. Der Kompressor 3 ist so in der Lage Frischluft L (oder ggfs. Ladeluft LL) spontan und flexibel mit hoher Leistung zu verdichten und vor der Turbine 42 einzublasen. Die dadurch erreichte Beschleunigung des Abgasturboladers 40 und damit des Brennkraftmotors 1 ist in der Amplitude und in der dynamischen Verfügbarkeit erheblich verbessert.

Vorliegend weist die mechanische Antriebskopplung 13 ein Motorgetriebe 30 auf. Ein erstes Getrieberad 33 eines ersten Antriebsstrangs 31 zwischen Brennkraftmotor 1 und Propeller 7 ist darin mit einem zweiten Getrieberad 34 eines zweiten Antriebsstrangs 32 zwischen Kompressor 3 und Elektromaschine 4 gekoppelt. Über eine Kupplung 35 des ersten Getriebestrangs 31 ist der Brennkraftmotor 1 mit seiner Kurbelwelle zum Antrieb des ersten Getrieberads 33 ausgelegt. Ein entsprechendes Drehmoment kann über das zweite Getrieberad 34 sowie eine weitere Kupplung 36 an den Kompressor 3 weitergegeben werden, um auch bei Normalbetrieb des Brennkraftmotors 1 eine verbesserte Aufladung mittels dem Kompressor 3 zur Verfügung zu stellen.

Darüber hinaus ist die Elektromaschine 4 über den zweiten Getriebestrang 32 und die Kupplung 36 dazu ausgelegt --über einen Akkumulatur 11 angetrieben- in wiederkehrenden Zeitintervallen den Kompressor 3 zusätzlich oder allein anzutreiben. Der Brennkraftmotor 1 kann dadurch mit massiver Beschleunigung versehen werden, die in vergleichsweise kurzen Zeitintervallen und mit vergleichsweise hoher Taktrate zur Verfügung steht.

Über eine weitere Kupplung 37 kann diese Leistung über den ersten Antriebsstrang 31 und ein Getrieberad 51 in das Propellergetriebe 50 eingebracht werden. Das Propellergetriebe 50 weist noch ein weiteres Getrieberad 53 der Propellerwelle 57 auf.

Ein Startermodus und Generatormodus der Elektromaschine 4 ist anhand von Fig. 1 erläutert. Ein Elektroboost-Modus und ein Schleichfahrtmodus für eine Elektromaschine 4 lässt sich anhand von Fig. 2 wie folgt erläutern. Das Propellergetriebe 50 kann, beispielsweise in einem Elektroboostmodus zusätzlich, oder, beispielsweise bei Schleichfahrt allein, durch die Elektromaschine 4 angetrieben werden. Dazu weist der zweite Antriebsstrang 32 eine weitere Kupplung 38 zu noch einem Getrieberad 52 des Propellergetrieties 50 auf. Das weitere Getrieberad 53 der Propellerwelle 57 kann somit wahlweise durch den Brennkraftmotor 1 allein, durch die Elektromaschine 4 allein, oder durch beide angetrieben werden.

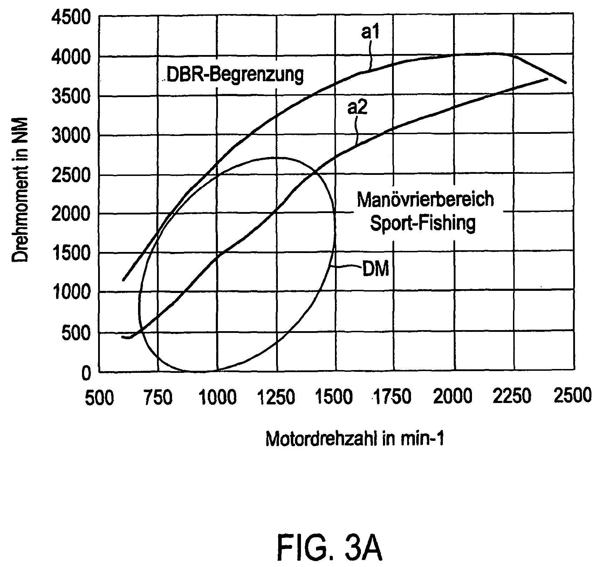

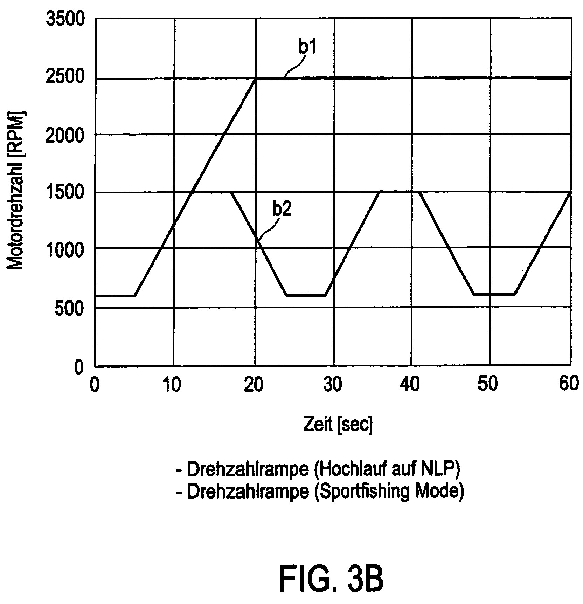

Zusätzlich kann in einem Intervallmodus der Brerinkraftmotor 1 den Propeller 7 antreiben und dann -darauf aufgesetzt- in wiederkehrenden Zeitintervallen die Elektromaschine 4 den Kompressor 3 antreiben. Letzteres führt zu zeitlich eng begrenzbaren und mit hoher Taktungsrate einstellbaren Motorbeschleunigungen, die an den Propeller 7 direkt abgegeben werden können. Ein Intervallmodus zum Betrieb eines Schiffsversorgungsnetzes mit einer Brennkraftmaschine 10 der vorher erläuterten Art ist gemäß dem Konzept der Erfindung beispielhaft anhand von Fig. 3 dargestellt.

Im Leerlaufbetrieb liefert der Brennkraftmotor 1 eine Motordrehzahl im Bereich von etwa 500 U/min. Beispielsweise beim Sportfischen hat es sich als erforderlich erwiesen, den Brennkraftmotor 1 nicht nur bei vergleichsweise hohen und dennoch unterhalb des Nennlastbetriebs liegenden Drehzahlen zu betreiben. Darüberhinaus sollten vergleichsweise hohe Drehmomente, die jedoch deutlich unterhalb einer Drehzahlbegrenzung liegen, in hoher Taktung verfügbar sein. Entsprechend Ist In Ansicht A der Fig. 3 der Kennlinie a1 ein drehzahlbegrenztes Drehmoment über die Motordrehzahl aufgetragen. In Ansicht B der Fig. 3 ist ein zugehöriger Nennlast- oder Volllastbetrieb als Kurve b1 über die Motordrehzahl in einem zeitlichen Verlauf dargestellt.

Der verfügbare Drehmomentbereich im Intervallmodus ist in Ansicht A der Fig. 3 -im Bereich IM anhand der Kennlinie a2- in etwa gezeigt. Im Intervallmodus IM können Motordrehzahlen zwischen vorliegend etwa 700 bis 1500 U/min vorliegend bei einem Drehmomentbereich deutlich oberhalb 400 Nm bis 2700 Nm erreicht werden. Die erreichbaren Drehmomente liegen dabei zum Teil nur knapp unterhalb der durch die Drehzahlbegrenzung festgelegten maximalen Drehmomente (Kennlinie a1).

Vorliegend zeigt dazu die Kennlinie a2 im bevorzugen Bereich des Intervallmodus IM einen nahezu linearen Verlauf zwischen einer Motordrehzahl von 700 U/min bei 500 Nm und 1400 U/min bei 2500 Nm. Der Intervallmodus IM kann unabhängig davon durchaus auch in einen höheren Motordrehzahlbereich ausgedehnt werden. Der Verlauf der Kurve a2 in Ansicht A der Fig. 3 zeigt diesen mit einer leicht anderen linearen Steigung.

Im bevorzugen Intervallmodus-Bereich IM zeigt Kennlinie b2 der Ansicht B der Fig. 3, dass die angegebenen Drehmomente bei entsprechender Motordrehzahl mit vergleichsweise steiler Rampe erreichbar sind; nämlich in einer Zeit von etwa weniger als 10sec. lässt sich eine Motordrehzahl zwischen 500 und 1500 U/min realisieren, um dabei ein Drehmoment von bis zu 2500 Nm abzugeben. Diese vergleichsweise steile Drehzahlrampe ist darüber hinaus bereits nach weniger als 20sec wiederholbar wie der Verlauf der Kurve b2 in Ansicht B der Fig. 3 zeigt. Dies wird ermöglicht durch die direkte mechanische Antriebskopplung zwischen Elektromaschine 4 und Kompressor 3 gemäß dem Konzept der Erfindung wie beispielhaft anhand Fig. 1 und Fig. 2 erläutert.

Der entsprechende Intervallmodus IM eignet sich besonders bevorzugt bei der Verwendung eines Wasserfahrzeugs zum Sportfischen oder dergleichen. Konkret ist es vorliegend möglich innerhalb von etwa 10sec die Motordrehzahl von 500 auf 1500 U/min anzuheben und dabei ein Drehmoment von 2500 Nm aus dem Leerlaufbetrieb zu erreichen. Dieses Niveau kann vorliegend über wenigstens 10sec gehalten werden. Danach kann der Brennkraftmotor 1 in den Leerlaufbetrieb bei etwa 500 Nm und einer Drehzahl von etwa 500 U/min zurückfallen und im Leerlauf für wenigstens 10sec verbleiben. Danach kann wiederum über eine Zeit von nur 10sec eine nächste steile Rampe wie zuvor erläutert gefahren werden, um den Brennkraftmotor 1 erneut bei vergleichsweise hohen Drehmoment von 2500 Nm und 1500 U/min zu betreiben.

Dieser periodisch getaktete Betrieb des Brennkraftmotors 1 kann automatisiert werden und muss nicht manuell für jeden Takt neu angesteuert werden. Beispielsweise kann der periodisch getaktete Intervallmodus IM vorliegend durch eine entsprechende Taste im Armaturenfeld des Wasserfahrzeugs geschaltet werden. Er kann sich auch automatisch einstellen, wenn beispielsweise der Führer des Wasserfahrzeugs über eine geeignete Wählhebelstellung die Geschwindigkeit in einen bestimmten Bereich bringt. Der Intervallmodus kann auch durch Drosselung der Ladeluft LL eingestellt werden.

Insgesamt wird gemäß dem Konzept der Erfindung ein über die Elektromaschine 4 erreichter direkter Antrieb des Kompressors 3 realisiert, der spontan und mit vergleichsweise hoher Taktrate verfügbar ist. Durch die mittels dem Kompressor 3 gesteigerte Drehzahl der Turbine 42 des Turboladers 40 wird der Brennkraftmotor 1 zu einer spontanen und mit hoher Taktrate gezielt erreichbaren Beschleunigung versehen. Der Betrieb des Brennkraftmotors 1 verläuft dabei gegebenenfalls bis nah an die Leistungsgrenze je nach Bedarf: Besonders vorteilhaft kann der Brennkraftmotor 1 bei etwa 50 % des durch die Drehzahlbegrenzungs-Kennlinie vorgegebenen Normal- oder Volllastdrehmoments bzw. Drehzahl betrieben werden.

### Bezugszeichenliste

- 1: Brennkraftmotor
- 2: Abgasturbolader
- 3: Kompressor
- 4: Elektromaschine
- 5: mechanisches Getriebe
- 6: mechanischer Verdichter
- 7: Propeller
- 8: Stromnetz
- 9: Wechselstrom-Gleichstrom-Wandler
- 10: Brennkraftmaschine
- 11: Akkumulacor
- 12: Bordnetz
- 13: mechanische Antriebskopplung
- 14: Aufladesystem
- 30: Motorgetriebe
- 31: erster Antriebsstrang
- 32: zweiter Antriebsstrang
- 33: erstes Getrieberad
- 34: zweites Getrieberad
- 35, 36, 37, 38: Kupplung
- 39: Getrieberad
- 40: Turbolader
- 41: Verdichter
- 42: Turbine
- 50: Propellergetriebe
- 52,53: Getrieberad
- 57: Antriebswelle des Propellers
- 100: Wasserfahrzeug
- AG: Abgas
- AGS: Abgasseite
- IM: Intervallmodus
- L: Frischluft
- LL: Ladeluft
- LLS: Ladefluidseite
- I: Primärseite
- II: Sekundärseite

## Patentansprüche

1. Brennkraftmaschine (10) aufweisend:
einen Brennkraftmotor (1) mit einer Abgasseite (AGS) und einer Ladefluidseite (LLS) und ein Aufladesystem (14) umfassend:
- einen Abgasturbolader (40) zur Aufladung des Brennkraftmotors (1), mit einer Verdichteranordnung (41) auf der Ladefluidseite (LLS) und einer Turbinenanordnung (42) auf der Abgasseite (AGS),
- einen Kompressor (3), dessen Primärseite (I) auf der Ladefluidseite (LLS) und dessen Sekundärseite (II) auf der Abgasseite (AGS) vor der Turbinenanordnung (42) angeschlossen ist,
**gekennzeichnet durch**
- eine als Motor/Generator ausgelegte Elektromaschine (4), die an den Brennkraftmotor (1) gekoppelt ist, wobei die Elektromaschine (4) als Generator von dem Brennkraftmotor (1) antreibbar ist oder als Motor den Brennkraftmotor (1) antreiben kann und wobei der Kompressor (3) über eine mechanische Antriebskopplung (13) direkt von der Elektromaschine (4) antreibbar ist.

2. Brennkraftmaschine (10) nach Anspruch 1 **dadurch gekennzeichnet, dass** die mechanische Antriebskopplung (13), insbesondere für eine Motorfunktion der Elektromaschine (4), ein Getriebe (5); insbesondere ein Motorgetriebe (30) und/oder einen mechanischen Verdichter (6) aufweiset, an das abtriebsseitig eine Antriebswelle des Kompressors (3) und antriebsseitig eine Antriebswelle der Elektromaschine (4) angekoppelt ist.

3. Brennkraftmaschine (10) nach Anspruch 1 oder 2 **dadurch gekennzeichnet, dass** die mechanische Antriebskopplung (13), insbesondere für eine Generatorfunktion der Elektromaschine (4), ein Propellergetriebe (50) aufweist, an das abtriebsseitig eine Antriebswelle (57) des Propellers (7) und antriebsseitig eine Antriebswelle der Elektromaschine (4) angekoppelt ist.

4. Brennkraftmaschine (10) nach einem der Ansprüche 1 bis 3 **dadurch gekennzeichnet, dass** an das Motorgetriebe (30) abtriebsseitig eine Antriebswelle des Kompressors (3) und eine Kurbelwelle des Brennkraftmotors (1) angekoppelt ist und/oder an das Propellergetriebe (50) abtriebsseitig eine Antriebswelle (57) des Propellers (7) und eine Kurbelwelle des Brennkraftmotors (1) angekoppelt ist.

5. Brennkraftmaschine (10) nach einem der Ansprüche 1 bis 4 **dadurch gekennzeichnet, dass** die Elektromaschine (4) als Motor betreibbar, die Funktion eines Starters und/oder eines Elektroantriebs ausführen kann, und die Elektromaschine (4) als Generator betreibbar, die Funktion einer Stromerzeugung für ein Bordnetz (12) und/oder einer Batterie (11) ausführen kann.

6. Brennkraftmaschine (10) nach einem der Ansprüche 1 bis 5 dadurch-gekennzeichnet, dass der Kompressor (3) in zeitlich begrenzten Zeitintervallen, insbesondere getaktet, direkt von der Elektromaschine (4) antreibbar ist.

7. Brennkraftmaschine nach Anspruch 5 **dadurch gekennzeichnet, dass** die Zeitintervalle geringer als 1 min, insbesondere geringer als 30sec sind.

8. Brennkraftmaschine (10) nach einem der Ansprüche 1 bis 7 **dadurch gekennzeichnet, dass**
eine oder mehrere der Betriebsmodi einnehmbar sind, die ausgewählt sind aus der Gruppe bestehend aus:
- Startermodus, derart ausgebildet, dass der Brennkraftmotor (1) von der Elektromaschine (4) angetrieben wird;
- Generatormodus, derart ausgebildet, dass die Elektromaschine (4) von dem Brennkraftmotor (1) angetrieben wird;
- Elektroboostmodus, derart ausgebildet, dass die Elektromaschine (4) und der Brennkraftmotor (1) einen Propeller (7) antreiben;
- Schleichfahrtmodus, derart ausgebildet, dass nur die Elektromaschine (4) einen Propeller (7) antreibt, insbesondere der Brennkraftmotor (1) und der Kompressor (3) keine Antriebsleistung an den Propeller (7) liefern;
- Intervallmodus, derart ausgebildet, dass der Brennkraftmotor (1) einen Propeller (7) antreibt und in Zeitintervallen die Elektromaschine (4) den Kompressor (3) antreibt.

9. Brennkraftmaschine (10) nach einem der Ansprüche 1 bis 8 **dadurch gekennzeichnet, dass**
insbesondere im Intervallmodus, der Kompressor (3) über eine mechanische Antriebskopplung (13) direkt von der Elektromaschine (4) angetrieben wird, wobei die Elektromaschine (4) von einer Batterie (11) angetrieben wird.

10. Wasserfahrzeug (100) mit einer Brennkraftmaschine (10) nach einem der vorhergehenden Ansprüche, das --insbesondere zur Verwendung beim Sportfischen- in einem Intervallmodus mit wiederkehrenden Zeitintervallen betrieben wird.

11. Wasserfahrzeug (100) nach Anspruch 10 **dadurch gekennzeichnet, dass** in einem Zeitintervall geringer als 10 min, insbesondere geringer als 1min, insbesondere geringer als 30sec der Propeller (7) mit einer Drehzahl der Brennkraftmaschine (10) In einem Drehzahlbereich oberhalb von 500RPM bis zu 1600RPM und/oder einem Drehmoment in einem Drehmomentbereich zwischen 500Nm und 3000Nm angetrieben wird.

12. Verfahren zum Betrieb eines Schiffsversorgungsnetzes mit einer Brennkraftmaschine (10) nach einem der vorhergehenden Ansprüche aufweisend die Betriebsmodi:
- Startermodus, derart ausgebildet, dass der Brennkraftmotor (1) von der Elektromaschine (4) angetrieben wird;
- Generatormodus, derart ausgebildet, dass die Elektromaschine (4) von dem Brennkraftmotor (1) angetrieben wird;
- Elektroboostmodus, derart ausgebildet, dass die Elektromaschine (4) und der Brennkraftmotor (1) einen Propeller (7) antreiben;
- Schleichfahrtmodus, derart ausgebildet, dass nur die Elektromaschine (4) einen Propeller (7) antreibt, insbesondere der Brennkraftmotor (1) und der Kompressor (3) keine Antriebsleistung an den Propeller (7) liefem;
- Intervallmodus -insbesondere zur Verwendung beim Sportfischen- derart ausgebildet, dass der Brennkraftmotor (1) einen Propeller (7) antreibt und in wiederkehrenden Zeitintervallen die Elektromaschine (4) den Kompressor (3) antreibt.

13. Verfahren nach Anspruch 12 **dadurch gekennzeichnet, dass** im Intervallmodus der Kompressor (3) direkt von der Elektromaschine (4) angetrieben wird, und die Zeitintervalle geringer als 1min, insbesondere geringer als 30sec, sind, und der Propeller mit einer Drehzahl der Brennkraftmaschine in einem Drehzahlbereich oberhalb von 500RPM bis zu 1600RPM und/oder einem Drehmoment in einem Drehmomentbereich zwischen 500 und 3000Nm angetrieben wird.

14. Verfahren nach Anspruch 13 **dadurch gekennzeichnet, dass** im Intervallmodus die Brennkraftmaschine (10) in einem Zeitintervall wenigstens eine Rampe zwischen einer Drehzahluntergrenze, insbesondere des Leerlaufbetriebs, und einer Drehzahlobergrenze in dem Drehzahlbereich und/oder in einem Zeitintervall wenigstens eine Rampe zwischen einer Drehmomentuntergrenze, insbesondere im Leerlaufbetrieb, und einer Drehmomentobergrenze in dem Drehmomentbereich fährt.

15. Verfahren nach einem der Ansprüche 12 bis 14, **dadurch gekennzeichnet, dass** im Intervallmodus der Kompressorantrieb aktiviert wird
- über eine Modustastenbetätigung der Steuerung, und/oder
- einem Ladeluftmangel; und/oder
- einer Geschwindigkeitswahl.

## Claims

1. Combustion engine (10) having:
a combustion motor (1) with an exhaust-gas side (AGS) and with a charge-fluid side (LLS) and
a supercharging system (14) comprising:
- an exhaust-gas turbocharger (40) for the supercharging of the combustion motor (1), having a compressor arrangement (41) on the charge-fluid side (LLS) and having a turbine arrangement (42) on the exhaust-gas side (AGS),
- a compressor (3) whose primary side (I) is connected to the charge-fluid side (LLS) and whose secondary side (II) is connected to the exhaust-gas side (AGS) upstream of the turbine arrangement (42),
**characterized by**
- an electric machine (4) which is designed as a motor/generator and which is coupled to the combustion motor (1), wherein the electric machine (4) can, as a generator, be driven by the combustion motor (1) or can, as a motor, drive the combustion motor (1), and wherein the compressor (3) can be driven by the electric machine (4) directly via a mechanical drive coupling (13).

2. Combustion engine (10) according to Claim 1, **characterized in that** the mechanical drive coupling (13), in particular for a motor function of the electric machine (4), has a gearing (5), in particular a motor gearing (30), and/or has a mechanical compressor (6) to which there is coupled, at the drive output side, a drive shaft of the compressor (3) and, at the drive input side, a drive shaft of the electric machine (4).

3. Combustion engine (10) according to Claim 1 or 2, **characterized in that** the mechanical drive coupling (13), in particular for a generator function of the electric machine (4), has a propeller gearing (50) to which there is coupled, at the drive output side, a drive shaft (57) of the propeller (7) and, at the drive input side, a drive shaft of the electric machine (4).

4. Combustion engine (10) according to one of Claims 1 to 3, **characterized in that** a drive shaft of the compressor (3) and a crankshaft of the combustion motor (1) are coupled to the motor gearing (30) at the drive output side, and/or a drive shaft (57) of the propeller (7) and a crankshaft of the combustion motor (1) are coupled to the propeller gearing (50) at the drive output side.

5. Combustion engine (10) according to one of Claims 1 to 4, **characterized in that** the electric machine (4) can be operated as a motor, which can perform the function of a starter and/or of an electric drive, and the electric machine (4) can be operated as a generator, which can perform the function of electricity generation for an on-board electrical system (12) and/or of a battery (11).

6. Combustion engine (10) according to one of Claims 1 to 5, **characterized in that** the compressor (3) can, in temporally limited time intervals, in particular cyclically, be driven directly by the electric machine (4).

7. Combustion engine according to Claim 5, **characterized in that** the time intervals are less than 1 minute, in particular less than 30 seconds.

8. Combustion engine (10) according to one of Claims 1 to 7, **characterized in that**
one or more of the operating modes selected from the following group can be assumed:
- starter mode, configured such that the combustion motor (1) is driven by the electric machine (4);
- generator mode, configured such that the electric machine (4) is driven by the combustion motor (1);
- electric boost mode, configured such that the electric machine (4) and the combustion motor (1) drive a propeller (7);
- creep travel mode, configured such that only the electric machine (4) drives a propeller (7), and in particular, the combustion motor (1) and the compressor (3) do not impart drive power to the propeller (7);
- interval mode, configured such that the combustion motor (1) drives a propeller (7) and, at time intervals, the electric machine (4) drives the compressor (3).

9. Combustion engine (10) according to one of Claims 1 to 8, **characterized in that**,
in particular in the interval mode, the compressor (3) is driven by the electric machine (4) directly via a mechanical drive coupling (13), wherein the electric machine (4) is driven by a battery (11).

10. Watercraft (100) having a combustion engine (10) according to one of the preceding claims, which watercraft is - in particular for use in sport fishing - operated in an interval mode with repeating time intervals.

11. Watercraft (100) according to Claim 10, **characterized in that**, in a time interval of less than 10 minutes, in particular less than 1 minute, in particular less than 30 seconds, the propeller (7) is driven with a rotational speed of the combustion engine (10) in a rotational speed range above 500 rpm up to 1600 rpm and/or with a torque in a torque range between 500 Nm and 3000 Nm.

12. Method for operating a ship on-board electrical system with a combustion engine (10) according to one of the preceding claims, having the operating modes:
- starter mode, configured such that the combustion motor (1) is driven by the electric machine (4);
- generator mode, configured such that the electric machine (4) is driven by the combustion motor (1);
- electric boost mode, configured such that the electric machine (4) and the combustion motor (1) drive a propeller (7);
- creep travel mode, configured such that only the electric machine (4) drives a propeller (7), and in particular, the combustion motor (1) and the compressor (3) do not impart drive power to the propeller (7);
- interval mode - in particular for use in sport fishing - configured such that the combustion motor (1) drives a propeller (7) and, at periodic time intervals, the electric machine (4) drives the compressor (3).

13. Method according to Claim 12, **characterized in that**, in the interval mode, the compressor (3) is driven directly by the electric machine (4), and the time intervals are less than 1 minute, in particular less than 30 seconds, and the propeller is driven with a rotational speed of the combustion engine in a rotational speed range above 500 rpm up to 1600 rpm and/or with a torque in a torque range between 500 Nm and 3000 Nm.

14. Method according to Claim 13, **characterized in that**, in the interval mode, the combustion engine (10), in one time interval, operates in accordance with at least one ramp between a rotational speed lower limit, in particular the idle mode, and a rotational speed upper limit in the rotational speed range, and/or, in one time interval, operates in accordance with at least one ramp between a torque lower limit, in particular in the idle mode, and a torque upper limit in the torque range.

15. Method according to one of Claims 12 to 14, **characterized in that**, in the interval mode, the compressor drive is activated
- on the basis of the actuation of a mode button of the controller, and/or
- on the basis of a charge air deficiency; and/or
- on the basis of a speed selection.

## Revendications

1. Machine à combustion interne (10) comportant :
un moteur à combustion interne (1) avec un côté de gaz d'échappement (AGS) et un côté de fluide de charge (LLS) et un système de charge (14) comprenant :
- un turbocompresseur de gaz d'échappement (40) permettant de charger le moteur à combustion interne (1), avec un dispositif de compresseur (41) sur le côté de fluide de charge (LLS) et un agencement de turbine (42) sur le côté de gaz d'échappement (AGS) ;
- un compresseur (3) dont le côté principal (I) est raccordé sur le côté de fluide de charge (LLS) et dont le côté secondaire (II) est raccordé sur le côté de gaz d'échappement (AGS), avant l'agencement de turbine (42) ;
**caractérisée par** :
- une machine électrique (4) réalisée sous la forme d'un moteur/générateur couplé au moteur à combustion interne (1), la machine électrique (4) étant entraînée par le moteur à combustion interne (1) lorsqu'elle sert de générateur ou pouvant entraîner en tant que moteur le moteur à combustion interne (1) et le compresseur (3) étant directement entraîné par la machine électrique (4) via un couplage d'entraînement mécanique (13).

2. Machine à combustion interne (10) selon la revendication 1, **caractérisée en ce que** le couplage d'entraînement mécanique (13) comporte, notamment pour une fonction de moteur de la machine électrique (4), comporte une transmission (5) ; notamment une transmission de moteur (30) et/ou un compresseur mécanique (6) auquel un arbre d'entraînement du compresseur (3) est couplé du côté d'entraînement en sortie et auquel un arbre d'entraînement en entrée de la machine électrique (4) est couplé du côté d'entraînement en entrée.

3. Machine à combustion interne (10) selon la revendication 1 ou 2, **caractérisée en ce que** le couplage d'entraînement mécanique (13) comporte, notamment pour une fonction de générateur de la machine électrique (4), une transmission d'hélice (50) à laquelle un arbre d'entraînement en entrée (57) de l'hélice (7) est couplé du côté d'entraînement en sortie et à laquelle un arbre d'entraînement en entrée de la machine électrique (4) est couplé du côté d'entraînement en entrée.

4. Machine à combustion interne (10) selon l'une quelconque des revendications 1 à 3, **caractérisée en ce qu'**un arbre d'entraînement en entrée du compresseur (3) et un arbre de vilebrequin du moteur à combustion interne (1) sont couplés à la transmission de moteur (30) du côté d'entraînement en sortie et/ou qu'un arbre d'entraînement en entrée (57) de l'hélice (7) et un arbre de vilebrequin du moteur à combustion interne (1) sont couplés à la transmission d'hélice (50) du côté d'entraînement en sortie.

5. Machine à combustion interne (10) selon l'une quelconque des revendications 1 à 4, **caractérisée en ce que** la machine électrique (4) peut être entraînée comme un moteur, pouvant effectuer la fonction d'un démarreur et/ou d'un entraînement électrique et que la machine électrique (4) peut être entraînée comme un générateur, pouvant effectuer la fonction d'une production de courant pour un réseau de bord (12) et/ou une batterie (11)

6. Machine à combustion interne (10) selon l'une quelconque des revendications 1 à 5, **caractérisée en ce que** le compresseur (3) est directement entraîné par la machine électrique (4) à intervalles de temps limités dans le temps, notamment de façon cadencée.

7. Machine à combustion interne selon la revendication 5, **caractérisée en ce que** les intervalles de temps sont plus réduits que 1 min, notamment plus réduits que 30 sec.

8. Machine à combustion interne (10) selon l'une quelconque des revendications 1 à 7, **caractérisée en ce qu'**il est possible d'adopter un ou plusieurs des modes de fonctionnement sélectionnés dans le groupe composé de :
- mode de démarreur, réalisé de telle sorte que le moteur à combustion interne (1) est entraîné par la machine électrique (4) ;
- mode de générateur, réalisé de telle sorte que la machine électrique (4) est entraînée par le moteur à combustion interne (1) ;
- mode d'électropropulseur, réalisé de telle sorte que la machine électrique (4) et le moteur à combustion interne (1) entraînent une hélice (7) ;
- mode ralenti, réalisé de telle sorte que seule la machine électrique (4) entraîne une hélice (7), le moteur à combustion interne (1) et le compresseur (3) n'apportant notamment aucune puissance d'entraînement à l'hélice (7) ;
- mode intervallaire, réalisé de telle sorte que le moteur à combustion interne (1) entraîne une hélice (7) et que la machine électrique (4) entraîne à intervalles de temps donnés le compresseur (3).

9. Machine à combustion interne (10) selon l'une quelconque des revendications 1 à 8, **caractérisée en ce que** dans le mode intervallaire notamment, le compresseur (3) est directement entraîné par la machine électrique (4) via un couplage d'entraînement mécanique (13), la machine électrique (4) étant entraînée par une batterie (11).

10. Véhicule marin (100) équipé d'une machine à combustion interne (10) selon l'une quelconque des revendications précédentes, entraînée - notamment pour la pêche sportive - dans un mode intervallaire avec des intervalles de temps répétitifs.

11. Véhicule marin (100) selon la revendication 10, **caractérisé en ce que** dans un intervalle de temps inférieur à 10 min, notamment inférieur à 1 min, notamment inférieur à 30 sec, l'hélice (7) est entraînée à une vitesse de rotation de la machine à combustion interne (10) comprise dans une plage de vitesse de rotation supérieure à 500 tr/min et pouvant atteindre 1600 tr/min et/ou à un couple de rotation compris dans une plage de couple de rotation comprise entre 500 Nm et 3000 Nm.

12. Procédé d'exploitation d'un réseau d'alimentation en énergie d'un véhicule marin avec une machine à combustion interne (10) selon l'une quelconque des revendications précédentes comportant les modes de fonctionnement suivants :
- mode de démarreur, réalisé de telle sorte que le moteur à combustion interne (1) est entraîné par la machine électrique (4) ;
- mode de générateur, réalisé de telle sorte que la machine électrique (4) est entraînée par le moteur à combustion interne (1) ;
- mode d'électropropulseur, réalisé de telle sorte que la machine électrique (4) et le moteur à combustion interne (1) entraînent une hélice (7) ;
- mode ralenti, réalisé de telle sorte que seule la machine électrique (4) entraîne une hélice (7), le moteur à combustion interne (1) et le compresseur (3) n' apportant notamment aucune puissance d'entraînement à l'hélice (7) ;
- mode intervallaire - notamment pour la pêche sportive
- réalisé de telle sorte que le moteur à combustion interne (1) entraîne une hélice (7) et que la machine électrique (4) entraîne à intervalles de temps répétés le compresseur (3).

13. Procédé selon la revendication 12, **caractérisé en ce que** dans le mode intervallaire, le compresseur (3) est directement entraîné par la machine électrique (4) et que les intervalles de temps sont inférieurs à 1 min, notamment inférieurs à 30 sec, et que l'hélice est entraînée à une vitesse de rotation de la machine à combustion interne comprise dans une plage de vitesse de rotation supérieure à 500 tr/min et pouvant atteindre 1600 tr/min et/ou à un couple de rotation compris dans une plage de couple de rotation comprise entre 500 Nm et 3000 Nm.

14. Procédé selon la revendication 13, **caractérisé en ce que** dans le mode intervallaire, la machine à combustion interne (10) parcourt dans un intervalle de temps au moins une rampe entre une limite inférieure de vitesse de rotation, notamment le fonctionnement à vide, et une limite supérieure de vitesse de rotation dans la plage de vitesses de rotation et/ou parcourt dans un intervalle de temps au moins une rampe entre une limite inférieure de couple de rotation, notamment en fonctionnement à vide, et une limite supérieure de couple de rotation dans la plage de couples de rotation.

15. Procédé selon l'une quelconque des revendications 12 à 14, **caractérisé en ce que** dans le mode intervallaire, l'entraînement de compresseur est activé
- via un actionnement de touches de mode de l'élément de commande ; et/ou
- d'un manque d'air de charge ; et/ou
- d'un choix de vitesse.
